# EUROPÄISCHE PATENTANMELDUNG

(11) **EP 2 829 943 A2**
(43) Veröffentlichungstag der Anmeldung: **28.01.2015**
(21) Anmeldenummer: 14002448.0
(22) Anmeldetag: 16.07.2014
(51) Int. Cl.: G05D 23/13

(54) **Sanitäre Thermostatarmatur**

(30) Priorität: 24.07.2013 DE 102013012296
(71) Anmelder: HANSA METALLWERKE AG, 70567 Stuttgart (DE)
(72) Erfinder: Assenmacher, Bernd, D-70597 Stuttgart (DE)
(74) Vertreter: Ostertag, Ulrich

(57) **Zusammenfassung**

Eine sanitäre Thermostatarmatur (1) umfasst in bekannter Weise ein Armaturengehäuse (2), in dem ein Regelglied (4) zur Einstellung eines gewünschten Verhältnisses von Kalt- und Warmwasser angeordnet ist. Hierzu besitzt das Regelglied (4) eine manuell verdrehbare Drehspindel (5). Die Menge des ausfließenden Mischwassers wird von einer Mengeneinstelleinrichtung bestimmt, die eine um die Achse der Drehspindel (5) von Hand verdrehbare Verstellhülse (7) aufweist. Ein Stellgetriebe (29, 30, 31, 32, 33) wirkt mit einem Endbereich der Verstellhülse (7) zusammen. Über sie kann eine bewegliche Steuerscheibe (38) verdreht werden, die mindestens eine Wasserdurchtrittsöffnung (40) aufweist. Diese bewegliche Steuerscheibe (38) liegt in bekannter Weise auf einer ortsfest angebrachten Grundscheibe (36) auf, die ihrerseits mindestens eine mit einer Auslauföffnung (25) für Mischwasser kommunizerende Durchtrittsöffnung (41, 42) besitzt. Diese sanitäre Thermostatarmatur (1) baut vergleichsweise klein und ist problemlos bedienbar und optisch ansprechend.

## Beschreibung

Die Erfindung betrifft eine sanitäre Thermostatarmatur mit
a) einem Armaturengehäuse, das eine Zulauföffnung für Kaltwasser, eine Zulauföffnung für Warmwasser und mindestens eine Auslauföffnung für Mischwasser aufweist;
b) einem in einer Aufnahmeöffnung des Armaturengehäuses angeordneten Regelglied, dem Kalt- und Warmwasser zuführbar sind und dem Mischwasser entnehmbar ist und das eine Drehspindel aufweist, durch deren Verdrehen eine Solltemperatur des ausfließenden Mischwassers einstellbar ist;
c) einer Mengeneinstelleinrichtung zur Bestimmung des aus der Thermostatarmatur ausfließenden Mischwassers, die umfasst:
   ca) eine ortsfest angebrachte Grundscheibe, die mindestens eine mit einer Auslauföffnung für Mischwasser kommunizierende Durchtrittsöffnung besitzt;
   cb) eine an der Grundscheibe anliegende bewegliche Steuerscheibe, die mittels einer Dreheinrichtung gegenüber der Grundscheibe verdrehbar ist und mindestens eine Wasserdurchtrittsöffnung aufweist.

Bei derartigen sanitären Thermostatarmaturen stellt sich das Problem, wie sowohl die Einrichtung, mit welcher die Solltemperatur des Wassers einstellbar ist, als auch die Einrichtung, mit der die Menge des ausfließenden Mischwassers vorgebbar ist, so verwirklicht werden können, dass die Thermostatarmatur konstruktiv einfach, optisch ansprechend und problemlos vom Benutzer zu bedienen ist. Bei einer vom Markt her bekannten sanitären Thermostatarmatur der eingangs genannten Art findet die Einstellung der Solltemperatur des Wassers durch Drehung einer Spindel um eine erste Achse statt, während die Mengeneinstelleinrichtung mit einer zweiten Achse arbeitet, die gegenüber der ersten Achse seitlich versetzt ist. Diese Bauweise führt zu einem verhältnismäßig komplexen Aufbau und zu relativ großen Abmessungen der Thermostatarmatur.

Aufgabe der vorliegenden Erfindung ist es, eine sanitäre Thermostatarmatur der eingangs genannten Art so auszubilden, dass ihr Aufbau einfach, die Abmessungen gering und die Bedienung problemfrei ist.

Diese Aufgabe wird erfindungsgemäß dadurch gelöst, dass die Dreheinrichtung, mit welcher die bewegliche Steuerscheibe gegenüber der Grundscheibe verdreht wird, umfasst:
d) eine um die Achse der Drehspindel verdrehbare und das Armaturengehäuse bereichsweise umgebende Verstellhülse;
e) ein mit einem Endbereich der Verstellhülse zusammenwirkendes Stellgetriebe, über welches die bewegliche Steuerscheibe verdreht werden kann.

Durch die erfindungsgemäß eingesetzte Stellhülse wird es möglich, dass die Einstellung der Solltemperatur ebenso wie die Einstellung der gewünschten Menge des ausfließenden Mischwassers durch Drehung um dieselbe geometrische Achse geschieht. Da die Verstellhülse das Armaturengehäuse nicht durchdringt sondern umgibt, wird der innere Aufbau der Thermostatarmatur einfach. Die Übertragung der Drehbewegung auf die im Inneren des Armaturengehäuses angebrachte bewegliche Steuerscheibe erfolgt dann über das Stellgetriebe, das durch die Verdrehung der Verstellhülse betätigt wird. Die erfindungsgemäße Bauweise macht möglich, dass die Drehung der beweglichen Steuerscheibe, die innerhalb des Armaturengehäuses stattfindet, um eine andere Achse erfolgen kann als die Drehung der beiden Einstelleinrichtungen. Die bewegliche Steuerscheibe kann daher im Grundsatz im Armaturengehäuse an einer beliebigen Stelle angebracht werden, so dass die geometrische Führung der inneren Wasserkanäle im Armaturengehäuse weitgehend der Disposition des Konstrukteurs überlassen werden kann.

Vorzugsweise ist das Stellgetriebe ein Übersetzungsgetriebe. Bei einem besonders günstigen Ausführungsbeispiel der Erfindung bewirkt eine Verdrehung der Verstellhülse um 90° eine Verdrehung der beweglichen Steuerscheibe um 120°.

Vorzugsweise beträgt der Durchmesser der beweglichen Steuerscheibe nur einen Bruchteil des Durchmessers des Armaturengehäuses bzw. bei im Querschnitt nicht kreisförmigen Armaturengehäusen der entsprechenden Dimension. Aufgrund des erfindungsgemäß eingesetzten Stellgetriebes braucht die bewegliche Steuerscheibe nicht radial über das Armaturengehäuse überzustehen und kann kleinflächig gehalten werden. Die Minimalabmessungen werden ausschließlich durch die gewünschte Literleistung der Thermostatarmatur bestimmt.

Schließlich zeichnet sich eine sehr günstige Ausführungsform der Erfindung dadurch aus, dass die Mengeneinstelleinrichtung gleichzeitig Umstelleinrichtung für die Wahl zwischen mehreren Verbrauchern ist und hierzu die Grundscheibe mit einer Mehrzahl von Durchtrittsöffnungen versehen ist, die jeweils mit einer Auslauföffnung für Mischwasser kommunizieren.

Ein Ausführungsbeispiel der Erfindung wird nachfolgend anhand der Zeichnung näher erläutert; es zeigen
- Figur 1: die Draufsicht auf eine sanitäre Thermostataramtur;
- Figur 2: einen Axialschnitt durch die Thermostatarmatur der Figur 1 gemäß der dortigen Linie II-II;
- Figur 3: einen Axialschnitt durch das Thermostatventil der Figur 1 gemäß der dortigen Linie III-III;
- Figur 4: einen Axialschnitt durch das Thermostatventil der Figur 1 gemäß der dortigen Linie IV-IV;
- Figur 5: einen Radialschnitt durch das Thermostatventil der Figur 2 gemäß der dortigen Linie V-V;
- Figur 6: einen Radialschnitt durch das Thermostatventil der Figur 2 gemäß der dortigen Linie VI-VI;
- Figur 7: einen Radialschnitt durch das Thermostatventil der Figur 2 gemäß der dortigen Linie VII-VII.

Die nachfolgende Beschreibung erfolgt am Beispiel einer sanitären Thermostatarmatur, die als sog. "Funktionsteil" ausgebildet ist. Unter einem "Funktionsteil" wird eine Sanitärarmatur verstanden, die Teil einer Unterputzarmatur ist und die bei der Endmontage mit einem in der Montagewand vorinstallierten Universal-Anschlusskörper verbunden wird. Derartige "Funktionsteile" werden von den Herstellern der Sanitärarmaturen für unterschiedliche Funktionen angeboten, beispielsweise als Einhandoder Zweihandarmaturen oder eben auch als Thermostatarmaturen.

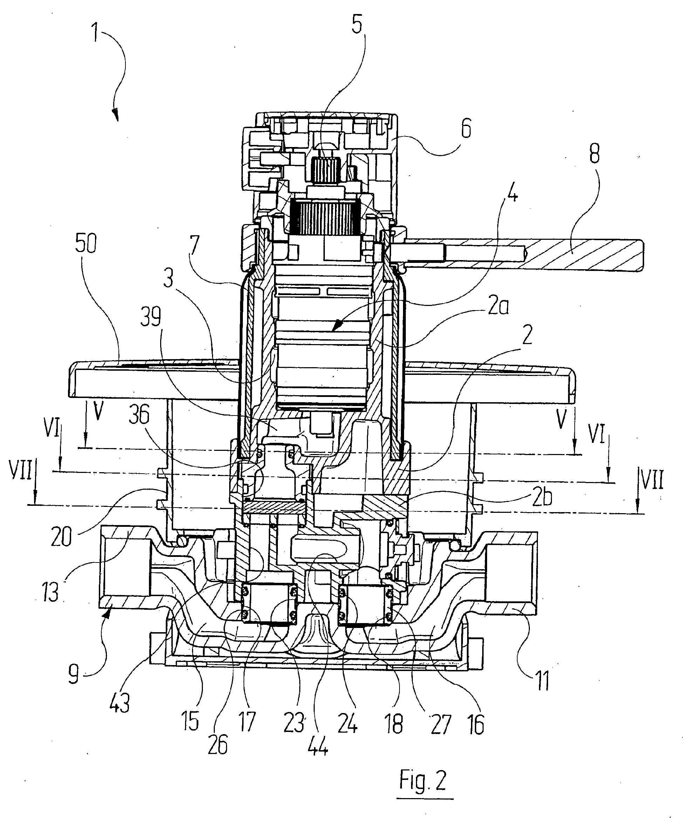

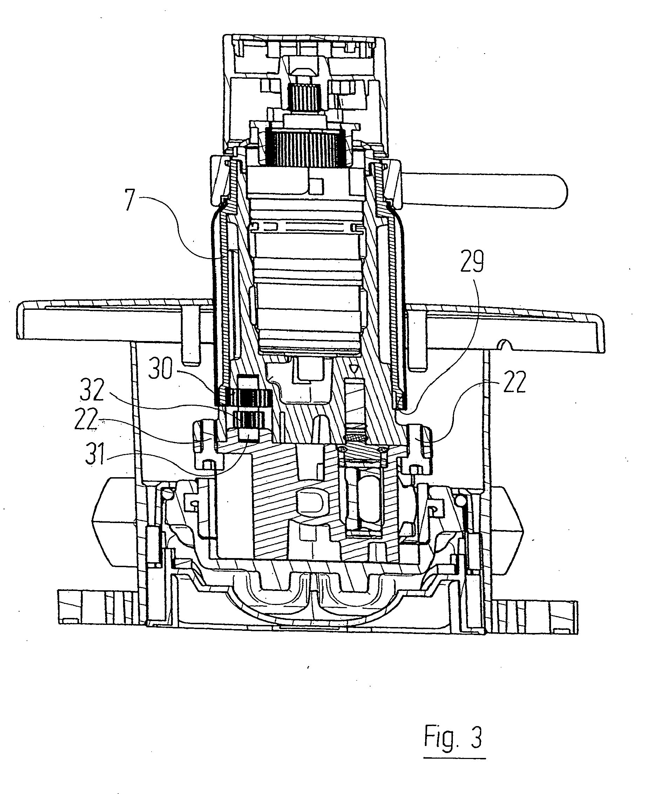

Die Thermostatarmatur, die insgesamt mit Bezugszeichen 1 gekennzeichnet ist, besitzt in bekannter Weise ein Armaturengehäuse 2, in dem ein Aufnahmeraum 3 für ein Regelglied 4 vorgesehen ist (vgl. Figuren 2 bis 4). Das dargestellte Armaturengehäuse 2 umfasst ein oberes Armaturengehäuseteil 2a und ein unteres Armaturengehaüseteil 2b, die durch Schrauben 22 (Figur 3) zusammengehalten sind. Wenn hier von "oben" und "unten" gesprochen wird, so sind damit die Verhältnisse in der Zeichnung, nicht notwendig die von der Einbaulage abhängigen Verhältnisse in der Realität gemeint. Das Regelglied 4 enthält ein temperaturempfindliches Stellelement, welches von dem die Sanitärarmatur ausströmenden Mischwasser umströmt ist und entsprechend dieser Temperatur einen Regelschieber betätigt. Dieser wirkt mit einem Kaltwassersitz und einem Warmwassersitz in dem Regelglied 4 zusammen, so dass das temperaturempfinliche Stellelement durch seine Position das Mischungsverhältnis von zuströmendem Kalt- und Warmwasser bestimmt. Diese Verhältnisse sind dem Fachmann bekannt; sie sind daher in der Zeichnung nicht näher dargestellt.

Die gewünschte Mischwassertemperatur wird mit Hilfe einer Drehspindel 5, die Teil des Regelgliedes 4 ist, und auf welche ein Handgriff 6 aufgesetzt ist, durch Verdrehen eingestellt.

Eine Verstellhülse 7 umgibt koaxial einen Bereich des Armaturengehäuses 2. Sie ist in ihrem oberen Endbereich drehschlüssig mit einem radial überstehenden Handgriff 8 verbunden. Mit Hilfe des Handgriffes 8 kann die Verstellhülse 7 um ihre Achse verdreht werden, was in nachfolgend beschriebener Weise zu einer Veränderung der Menge des auslaufenden Mischwassers und/oder zur Wahl eines von zwei angeschlossenen Verbrauchern genutzt werden kann.

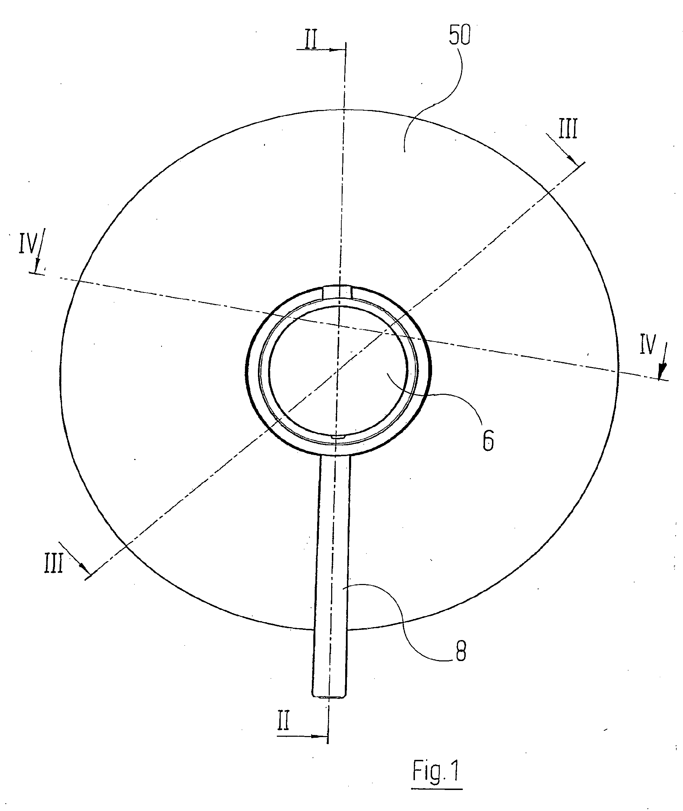

Bei der nachfolgenden Beschreibung dieser Verhältnisse werden verschiedene Axialschnitte verwendet, deren Lage der Figur 1 zu entnehmen ist, die im Wesentlichen ausschließlich diesem Zweck dient.

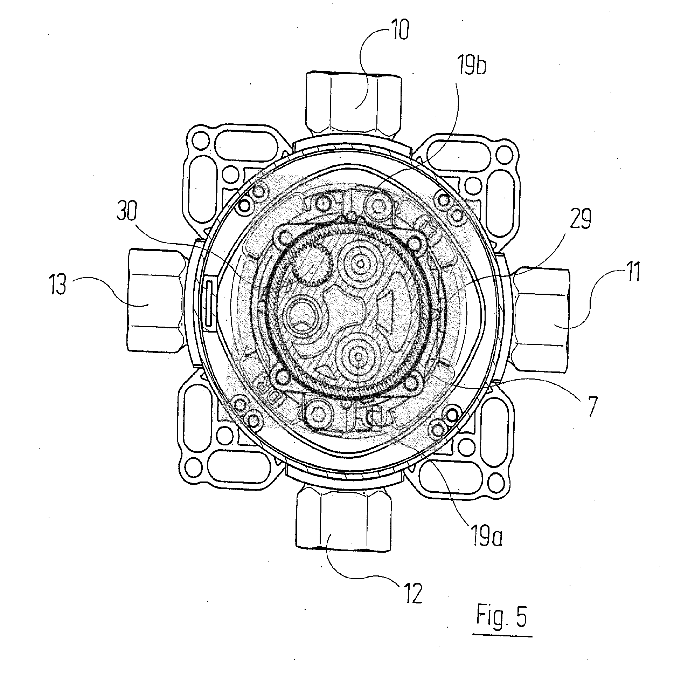

Zunächst sei jedoch kurz der Universalanschlusskörper beschrieben, mit dem das Funktionsteil 1 zur Vervollständigung der Gesamtarmatur verbunden ist. Dieser Universal-Anschlusskörper trägt das Bezugszeichen 9 und ist im Schnitt in den Figuren 2 bis 4 und in der Draufsicht in den Figuren 5 bis 7 erkennbar. Der Universalanschlusskörper 9 weist vier Anschlussstutzen 10, 11, 12, 13 auf, die jeweils einen Winkelabstand von 90° voneinander aufweisen. Der Anschlussstutzen 10 dient der Zufuhr von Kaltwasser, der Anschlussstutzen 12 der Zufuhr von Warmwasser. Der Anschlussstutzen 11 kann mit einem ersten Wasserverbraucher, beispielsweise einem Wannenauslauf, der Anschlussstutzen 13 mit einem zweiten Verbraucher, beispielsweise einer Brause, verbunden werden.

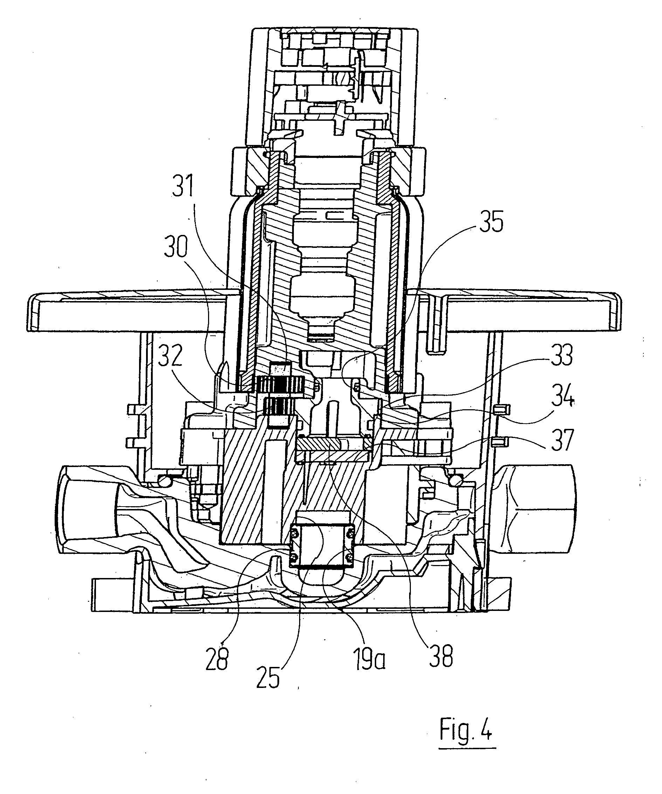

Innere Wasserwege, von denen insbesondere in Figur 2 die Wasserwege 15 und 16 erkennbar sind, führen jeweils zu einer Anschlussbohrung, von denen die Anschlussbohrungen 17 und 18 in Figur 2 und eine Anschlussbohrung 19a insbesondere in Figur 4 zu erkennen sind. Über diese Anschlussbohrungen 17, 18, 19a sowie die vierte nur in den Figuren 5 bis 7 erkennbare Anschlussbohrung 19b erfolgt der Übertritt von Wasser aus dem Universalanschlusskörper 9 in die Funktionseinheit 1 und umgekehrt aus der Funktionseinheit 1 in den Universalanschlusskörper 9. Dies wird weiter unten noch deutlicher werden.

Der Universalanschlusskörper 9 ist von einem becherförmigen, nach oben offenen Kuststoffgehäuse 20 umgeben, welches nach Art eines Unterputzkastens den Einbauraum der Unterputzarmatur in der Montagewand abgrenzt. Über dem Kunststoffgehaüse liegt eine Abdeckrosette 50, welche im fertig montierten Zustand den Einbauraum überdeckt.

Durch das untere Armaturengehäuseteil 2b verlaufen verschiedene Wasserkanäle, welche zusammen mit weiteren noch zu beschreibenden Bauelementen die wassermäßige Verbindung zwischen dem oberen Armaturengehäuseteil 2a und dem Umniversalanschlusskörper 9 herstellen. Hierzu besitzt das untere Armaturengehäuseteil 2b an seiner unteren Stirnfläche für jede Anschlussbohrung 17, 18, 19a, 19b eine eigene Anschlussbohrung, von denen in Figur 2 die Anschlussbohrungen 23 und 24 und in Figur 4 die Anschlussbohrung 25 zu erkennen sind.

Die Wasserüberleitung aus den im Universalanschlusskörper 9 in das untere Armaturengehäuseteil 2b und umgekehrt geschieht mit Hilfe von kurzen rohrförmigen Verbindungsstücken 26, 27, 28, die insbesondere dort, wo sie von zugeführtem Kalt- bzw. Warmwasser durchflossen werden, als Rückflussverhinderer ausgestaltet sein können. Diese Verbindungsstücke 26, 27, 28 sind jeweils durch O-Ringe, die zur Entlastung der Figuren nicht mit Bezugszeichen versehen sind, gegen den Universalanschlusskörper 9 bzw. das untere Armaturengehäuseteil 2b abgedichtet.

Die Figuren 3 und 4 zeigen, dass der untere Endbereich der Verstellhülse 7 mit einer Innenverzahnung 29 versehen ist. Diese Innenverzahnung 29 kämmt mit einem Ritzel 30, das seinerseits drehschlüssig mit einer zur geometrischen Achse der Verstellhülse 7 parallelen Achse 31 verbunden ist. Die Achse 31 ist an ihrem oberen Ende im oberen Armaturengehäuseteil 2a und am unteren Ende im unteren Armaturengehäuseteil 2b drehbar gelagert.

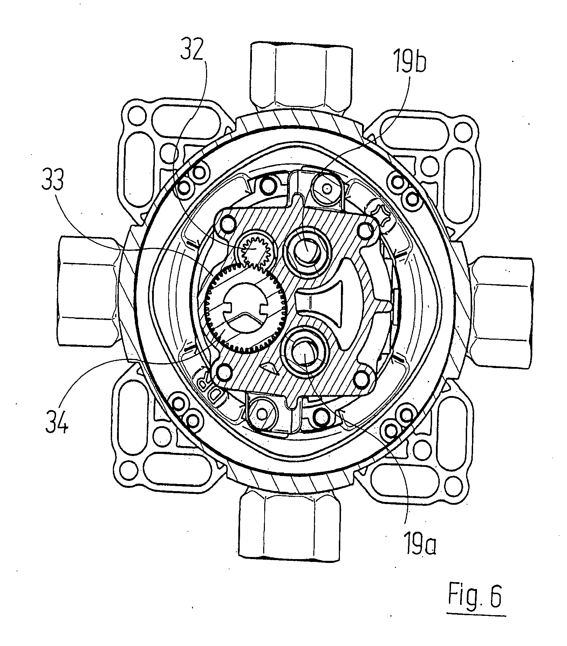

Auf der Achse 31 befindet sich, ebenfalls drehschlüssig mit dieser verbunden, ein zweites Ritzel 32, dessen Durchmesser jedoch kleiner als derjenige des ersten Ritzels 30 ist. Dieses zweite Ritzel 32 kämmt mit einer Außenverzahnung 33 auf einem Mitnahmeteil 34. Dies ist am deutlichsten den Figuren 4 und 6 zu entnehmen. Das Mitnahmeteil 34 ist mit einem oberen, im Durchmesser verjüngten Hals in einer Bohrung an der Unterseite des oberen Armaturengehäuseteils 2a und mit seinem unterhalb der Außenverzahnung 33 liegenden Bereich in einer Bohrung 36 des unteren Armaturengehäusestels 2b um eine geometrische Achse drehbar geführt, die parallel zur geometrischen Achse der Verstellhülse 7 verläuft. Geeignete O-Ringe dichten das Mitnahmeteil 34 gegen das obere Armaturengehäuseteil 2a und das untere Armaturengehäuseteil 2b ab.

Durch das Mitnahmeteil 34 verläuft in axialer Richtung eine Durchgangsbohrung 35.

Auf dem Boden der Bohrung 36 des unteren Armaturengehäuses 2b liegt eine erste Steuerscheibe 37 aus keramischem Material auf. Sie ist dort durch einen geeigneten Formschluss unverdrehbar gehalten und wird nachfolgend "Grundscheibe" genannt. Auf der Oberseite der Grundscheibe 37 liegt eine zweite Steuerscheibe 38 aus Keramikmaterial auf, welche mit dem Mitnahmeteil 34 in geeigneter Weise drehschlüssig verbunden ist.

Die oben beschriebene Anordnung ist offensichtlich so, dass durch Verdrehen der Verstellhülse 7 mit Hilfe des Handgriffes 8 über eine Art Stellgetriebe, das beim beschriebenen Ausführungsbeispiel aus der Innenverzahnung 29 der Verstellhülse 7, den beiden Ritzeln 30 und 32 sowie aus der Außenverzahnung 33 des Mitnahmeteils 34 besteht, das Mitnahmeteil 34 verdreht werden kann, wodurch die zweite Steuerscheibe 38 gegenüber der Grundscheibe 37 in beiden Drehrichtungen verdrehbar ist. Dies dient, wie nachfolgend beschrieben wird, der Einstellung der Menge des ausfließenden Mischwassers und/oder der Wahl des Verbrauchers, dem das ausfließende Mischwasser zuströmt.

Zu diesem Zweck sind verschiedene Durchtrittsöffnungen in den beiden Steuerscheiben 37 und 38 vorgesehen, die mit entsprechenden Wasserwegen kommunizieren.

Zunächst seien die Wasserwege beschrieben, über welche Wasser zur zweiten, obenliegenden Steuerscheibe 38 geführt wird. Wie oben schon angedeutet, strömt das Kalt- und Warmwasser über die Anschlussstutzen 10 und 12 in den Universalanschlusskörper 9 ein, durchfliesst dessen Wasserwege bis zu den entsprechenden Anschlussöffnungen 19a, 19b. Von dort durchströmen das Kalt- und Warmwasser entsprechende Wasserkanäle in dem unteren Armaturengehäuseteil 2b und dem oberen Armaturengehäuseteil 2a 2 im Wesentlichen achsparallel nach oben zu dem Aufnahmeraum 3 des Regelgliedes 4 und tritt dort in grundsätzlich bekannter Weise an der Umfangsfläche des Regelgliedes 4 in dieses ein. In diesem Regelglied 4 wird das Mischwasser entsprechend der Position des Stellschiebers gemischt und auf die durch Einstellung an dem Handgriff 6 gewählte Solltemperatur gebracht.

Das so erhaltene Mischwasser tritt an der Unterseite des Regelgliedes 4 aus und von dort in einen Mischwasserkanal 39 im oberen Armaturengehäuseteil 2a ein. Dieser führt im Wesentlichen radial bis zu einer Stelle oberhalb des Mitnahmeteils 34, so dass das Mischwasser von oben her in die Durchgangsbohrung 35 des Mitnahmeteiles 34 gelangt.

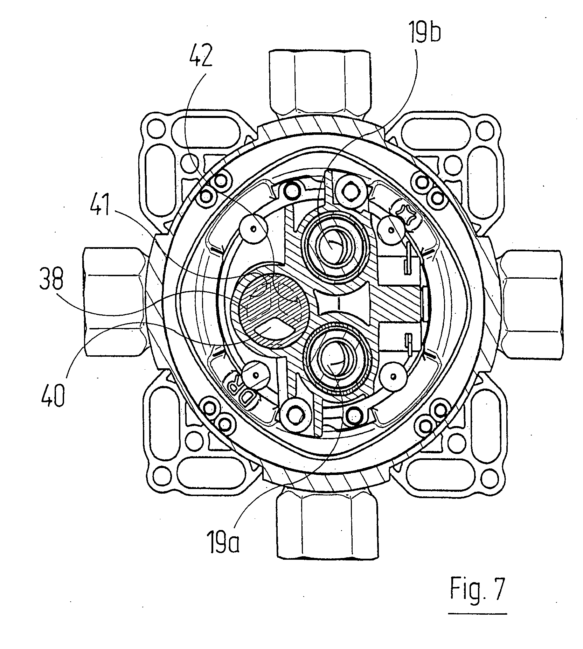

Die obere, von dem Mitnahmeteil 34 mitgeführte Steuerscheibe 38 besitzt, wie in Figur 7 dargestellt, eine einzige kreissektorförmige Durchtrittsöffnung 40. Die darunter liegende Grundscheibe 37 weist zwei kreissektorförmige Durchtrittsöffnungen 41, 42 auf, die in Figur 7 gestrichelt dargestellt sind. Die Größe und Anordnung der Durchtrittsöffnungen 41 und 42 der Grundscheibe 37 sind so gewählt, dass, wie in Figur 7 gezeigt, eine Drehposition der Steuerscheibe 38 möglich ist, in welcher deren Durchtrittsöffnung 40 mit keiner der Durchtrittsöffnungen 41, 42 der Grundscheibe 37 überlappt.

Die erste Durchtrittsöffnung 41 der Grundscheibe 37 kommuniziert über einen kurzen, geradlinien Mischwasserkanal 43 mit der Anschlussbohrung 17 des Universalanschlusskörpers 9, während die zweite Durchtrittsöffnung 42 der Grundscheibe 37 über einen abgewinkelten Kanal 44, der durch das untere Armaturengehäuseteil 2b geführt ist, mit der Anschlussbohrung 18 des Universalanschlusskörpers 9 kommuniziert.

Nun kann erläutert werden, wie mit Hilfe der beiden Steuerscheiben 17, 18 die Menge des auslaufenden Mischwassers sowie der Verbraucher, dem dieses Mischwasser zuführt, gewählt werden können:
Ersichtlich kann der Mischwasserfluss vollständig zu beiden Verbrauchern abgestellt werden, wenn die bewegliche Steuerscheibe 38 in die in Figur 7 dargestellte Position verdreht wird, in der keinerlei Überlappung ihrer Durchtrissöffnung 40 mit den Durchtrittsöffnungen 41, 42 der Grundscheibe 37 vorliegt. Wird nunmehr mit Hilfe des Handgriffes 8 und der Verstellhülse 7 über das oben beschriebene Stellgetriebe die bewegliche Steuerscheibe 38 in Figur 7 im Uhrzeigersinn verdreht, so beginnt deren Durchtrittsöffnung 40 zunehmend die Durchtrittsöffnung 41 der Grundscheibe 37 zu überlappen. Dies hat eine zunehmende Strömung von Mischwasser durch diese Durchtrittsöffnung 41 und von dort zum Anschlussstutzen 13 zur Folge, über welchen der Brauseauslauf gespeist wird. Wenn die Durchtrittsöffnung 40 der beweglichen Steuerscheibe 38 die Durchtrittsöffnung 41 der Grundscheibe 37 vollständig überlappt, ist die maximale Menge an Mischwasserströmung erreicht.

Wird aus der in Figur 7 dargestellten Absperrstellung die bewegliche Steuerscheibe 38 entgegen dem Uhrzeigersinn verdreht, so beginnt sich deren Durchtrittsöffnung 40 zunehmend mit der zweiten Durchtrittsöffnung 42 der Grundscheibe 37 zu überlappen, was einen zunehmenden Mischwasserstrom über den abgewinkelten Mischwasserkanal 44 zum Anschlussstutzen 11 zur Folge hat, über welchen die Wanne versorgt wird.

Schließlich ist es möglich, die bewegliche Steuerscheibe 37 über die oben erwähnten Endstellungen hinaus so weit zu verdrehten, dass ihre Durchtrittsöffnung 40 sowohl die Durchtrittsöffnung 41 als auch die Durchtrittsöffnung 42 der Grundscheibe 36 überlappt. Auf diese Weise können beide mit der sanitären Thermostatarmatur 1 verbundene Verbraucher mit Mischwasser gespeist werden, wobei das Verhältnis, in denen das Mischwasser den beiden Verbrauchern zugespeist wird, von der Drehposition der beweglichen Steuerscheibe 38 abhängt.

## Patentansprüche

1. Sanitäre Thermostatarmatur mit
a) einem Armaturengehäuse (2), das eine Zulauföffnung (19a) für Kaltwasser, eine Zulauföffnung (19b) für Warmwasser und mindestens eine Auslauföffnung (25) für Mischwasser aufweist;
b) einem in einer Aufnahmeöffnung (3) des Armaturengehäuses (2) angeordneten Regelglied (4), dem Kaltund Warmwasser zuführbar sind und dem Mischwasser entnehmbar ist und das eine Drehspindel (5) aufweist, durch deren Verdrehen eine Solltemperatur des ausfließenden Mischwassers einstellbar ist;
c) einer Mengeneinstelleinrichtung zur Bestimmung des aus der Thermostatarmatur (1) ausfließenden Mischwassers, die umfasst:
ca) eine ortsfest angebrachte Grundscheibe (37), die mindestens eine mit einer Auslauföffnung (25) für Mischwasser kommunizierende Durchtrittsöffnung (41, 42) besitzt;
cb) eine an der Grundscheibe (37) anliegende bewegliche Steuerscheibe (38), die mittels einer Dreheinrichtung gegenüber der Grundscheibe (37) verdrehbar ist und mindestens eine Wasserdurchtrittsöffnung (40) aufweist;
**dadurch gekennzeichnet, dass** die Dreheinrichtung umfasst:
d) eine um die Drehspindel (5) verdrehbare und das Armaturengehäuse (2) bereichsweise umgebende Verstellhülse (7);
e) ein mit einem Endbereich der Verstellhülse (7) zusammenwirkendes Stellgetriebe (29, 30, 31, 32, 33), über welches die bewegliche Steuerscheibe (38) verdreht werden kann.

2. Sanitäre Thermostatarmatur nach Anspruch 1, **dadurch gekennzeichnet, dass** das Stellgetriebe umfasst:
a) eine Innenverzahnung (29) am Endbereich der Stellhülse (7);
b) ein mit der Innenverzahnung (29) kämmendes erstes Ritzel (30), das mit einer in dem Armaturengehäuse (2) drehbar gelagerten Achse (31) drehschlüssig verbunden ist;
c) ein mit der Achse (31) drehschlüssig verbundenes zweites Ritzel (32);
d) eine mit dem zweiten Ritzel (32) kämmende Verzahnung (33), die an einem Mitnahmeteil (34) für die bewegliche Steuerscheibe (38) ausgebildet ist.

3. Sanitäre Thermostatarmatur nach Anspruch 1 oder 2, **dadurch gekennzeichnet, dass** das Stellgetriebe (29, 30, 31, 32, 33) ein Übersetzungsgetriebe ist.

4. Sanitäre Thermostatarmatur nach einem der vorhergehenden Ansprüche, **dadurch gekennzeichnet, dass** der Durchmesser der beweglichen Steuerscheibe (38) nur einen Bruchteil des Durchmessers des Armaturengehäuses (2) bzw. bei im Querschnitt nicht kreisförmigen Armaturengehäusen der entsprechenden Dimension beträgt.

5. Sanitäre Thermostatarmatur nach einem der vorhergehenden Ansprüche, **dadurch gekennzeichnet, dass** die Mengeneinstelleinrichtung gleichzeitig Umstelleinrichtung für die Wahl eines Verbrauchers ist und hierzu die Grundscheibe (37) mit einer Mehrzahl von Durchtrittsöffnungen (40, 41) versehen ist, die jeweils mit einer Auslassöffnung (25) für Mischwasser kommunizieren.
